# EUROPEAN PATENT APPLICATION

(11) **EP 4 391 146 A1**
(43) Date of publication of application: **26.06.2024**
(21) Application number: 22215639.0
(22) Date of filing: 21.12.2022
(51) Int. Cl.: H01M 10/48, H02H 7/18

(54) **SAFETY SYSTEM FOR A BATTERY ASSEMBLY, BATTERY ASSEMBLY, VEHICLE, AND METHOD FOR OPERATING A BATTERY ASSEMBLY**

(71) Applicant: Volvo Car Corporation, 405 31 Göteborg (SE)
(72) Inventor: AHLBERG TIDBLAD, Annika, 40531 Göteborg (SE); FRIDHOLM, Björn, 40531 Göteborg (SE); WERBERG, Leopold, 40531 Göteborg (SE)
(74) Representative: Maiwald GmbH

(57) **Abstract**

The disclosure relates to a safety system (30) for a battery assembly (12). The battery assembly (12) has a plurality of battery cells (22) which are electrically connected by at least one conductor part (24). The safety system (30) comprises a cell ambient sensor (32) being configured to detect a characteristic of a cell environment (34), a disconnector unit (38) being configured to be coupled to the at least one conductor part (24) and being configured to electrically separate the at least one conductor part (24) into at least two conductor part portions, and a control unit (36). The control unit (36) is configured to activate the disconnector unit (38) as a function of a detection result of the cell ambient sensor (32). Additionally, a battery assembly (12) is presented which comprises such a safety system (30). Moreover, a vehicle and a method for operating a battery assembly (12) are explained.

## Description

The present disclosure relates to a safety system for a battery assembly. The battery assembly has a plurality of battery cells being electrically connected by at least one conductor part.

The present disclosure is additionally directed to a battery assembly.

The present disclosure is also directed to a vehicle.

Moreover, the present disclosure relates to a method for operating a battery assembly.

If used as a traction battery assembly of a vehicle, a battery assembly may be configured to provide high voltages, e.g. 800 volts. Moreover, the battery cells of known battery assemblies comprise chemical substances that are flammable or can react to flammable substances in case of a malfunction of a battery cell. Consequently, in case of a malfunction or an error of a battery assembly, this battery assembly can be hazardous for a human being being present in the surroundings of the battery assembly.

It is therefore an objective of the present disclosure to increase the operational safety of battery assemblies. In doing so, a risks for a human being resulting from a battery assembly shall be mitigated.

The problem is at least partially solved or alleviated by the subject matter of the independent claims of the present disclosure, wherein further examples are incorporated in the dependent claims.

According to a first aspect, there is provided a safety system for a battery assembly. The battery assembly has a plurality of battery cells being electrically connected by at least one conductor part. The safety system comprises a cell ambient sensor being configured to detect a characteristic of a cell environment. Moreover, the safety system comprises a disconnector unit being configured to be coupled to the at least one conductor part and being configured to electrically separate the at least one conductor part into at least two conductor part portions. Additionally, the safety system comprises a control unit. The control unit is communicatively connected to the cell ambient sensor and to the disconnector unit. The control unit is configured to activate the disconnector unit as a function of a detection result of the cell ambient sensor. In the present context, the cell environment is to be understood as a portion of the battery assembly being arranged inside the enclosure and outside the battery cells. This cell environment is mainly filled with air. The air fulfills the function of insulating the enclosure of the battery assembly with respect to the battery cells. Using the cell ambient sensor, a characteristic of the cell environment can be detected. This characteristic can have an influence on the insulation properties of the cell environment. In other words, using the cell ambient sensor, the cell environment may be monitored with respect to the insulation properties of the cell environment. Using the control unit, the disconnector unit can be activated as a function of a detection result of the cell ambient sensor. Consequently, the disconnector unit can be used to electrically separate the conductor part as a function of insulation properties of the cell environment. Here, activating the disconnector unit means requesting the disconnector unit to electrically separate the conductor part to which it is coupled. When electrically separating the conductor parts, a voltage level inside the battery assembly may be reduced. This may be easily understood when considering a plurality of battery cells being connected in series such that a voltage of for example 800 volts can be provided. If this series connection is separated into two halves comprising an equal number of battery cells, each of the halves can provide half the voltage of the original configuration, for example 400 volts. Consequently, arcing inside the battery assembly can be avoided if, as a consequence of reduced insulation properties, the voltage level of the battery assembly is reduced. Altogether, the operational safety of the battery assembly can be enhanced by using such a safety system.

The general idea underlying the present disclosure can, thus, be summarized as selectively reducing the voltage level inside a battery pack such that arcing is not possible or cannot be sustained.

In an example, the safety system is configured to be operational in a situation in which an associated battery assembly is in use, i.e. if a current is withdrawn from the battery assembly or charged to the battery assembly. Additionally, the safety system may be configured to be operational in a situation in which an associated battery assembly is not in use, i.e. if no current is withdrawn from the battery assembly and no current is charged to the battery assembly. Thus, the battery assembly is in a safe state in all of the above situations.

In an example, the safety system additionally comprises an electric separation system being configured to electrically disconnect the battery assembly as a whole from one or more external systems. It is noted that the electric separation system is distinct from the disconnector unit.

In an example, the safety system can comprise two or more disconnector units. Consequently, two or more conductor parts can be electrically separated into two conductor part portions.

In the context of the present disclosure, the battery assembly may be a traction battery assembly of the vehicle. The battery assembly may additionally or alternatively be an auxiliary battery assembly. The auxiliary battery assembly may be used to power auxiliary loads in the vehicle. Alternatively, the battery assembly may be a stationary battery assembly. The stationary battery assembly can be a mid-scale battery installation or a large-scale battery installation. In all applications, the battery assembly can be a Li-ion battery assembly.

In an example, the cell ambient sensor comprises at least one of a pressure sensor, a temperature sensor, a conductivity sensor and a substance sensor. Using a pressure sensor, a gassing event of one or more of the battery cells may be reliably detected. During a gassing event, electrically conductive particles may reach the cell environment and, thus, reduce the insulation properties thereof. Using a temperature sensor, a thermal event, i.e. a malfunction leading to the generation of heat, of one or more of the battery cells may be reliably detected. Using a conductivity sensor, an electric conductivity of the cell environment may be detected in a reliable and precise manner. Using a substance sensor, the presence of one or more predefined chemical substance may be detected in the cell environment. In this context, the substance sensor may be configured to detect one or more specific chemical substances that have a negative effect on the insulation properties of the cell environment. Consequently, in all of the above-mentioned alternatives, situations which may have a negative effect on the insulation properties of the cell environment and which, thus, present a risk for human beings in the surroundings of a battery assembly, may be reliably detected. More precisely, using any one or any combination of the above-mentioned alternatives, a situation in which a battery cell is subject to a malfunction may be detected comparatively early. This further improves operational safety. In an example, a gassing event occurs and during the first seconds of the gassing event, it can be detected that the cell environment transitions from clean air to a high temperature, high pressure environment comprising electrically conductive particles. Moreover, the environment may comprise flammable gases.

In an example, the disconnector unit comprises at least one of a pyrotechnic disconnector, a magnetic disconnector, and a relay. Using any one or any combination of these alternatives, the conductor part may be electrically separated into two conductor part portions in a quick and reliable manner. In other words, a voltage level inside a battery assembly may be quickly and reliably reduced. This enhances operational safety of the battery assembly.

In an example, the disconnector unit is at least partially sealed by a sealing coat. The sealing coat has the effect that an electrical arc potentially occurring when activating the disconnector unit, i.e. electrically separating the conductor part using the disconnector unit, cannot reach the cell environment. This further enhances operational safety of the battery assembly.

In an example, the safety system further comprises a notification unit being communicatively connected to the control unit and being configured to issue a notification as a function of a detection result of the cell ambient sensor. Following such a notification, human beings being located in the surroundings of a battery assembly, may be incited to move away there from, e.g. leave a vehicle comprising the battery assembly.

In an example, the notification unit and the control unit are formed integrally, i.e. the functionalities of the control unit and the notification unit are provided by a common unit.

In an example, the safety system further comprises a diagnostics unit being coupled to the disconnector unit and being configured to monitor the operation of the disconnector unit. Consequently, safe and reliable operation of the disconnector unit can be ensured. Overall, this enhances operational safety over battery assembly.

In an example, the diagnostics unit comprises a voltage sensor being configured to measure a voltage between two opposite electric ends of the disconnector unit. Using such a voltage sensor, it is possible to determine whether the detector unit has achieved a full electrical separation of the conductor part coupled thereto.

In an example, the diagnostics unit and the control unit are formed integrally, i.e. the functionalities of the control unit and the diagnostics unit are provided by a common unit.

In another example, the notification unit, the diagnostics unit and the control unit are formed integrally, i.e. the functionalities of the control unit, the notification unit and the diagnostics unit are provided by a common unit.

In an example, the safety system further comprises at least one cell-level voltage sensor being communicatively connected to the control unit and being configured to detect a voltage of an associated battery cell. The control unit is configured to activate the disconnector unit as a function of a detection result of the cell-level voltage sensor. Based on the detection result of the cell-level voltage sensor, malfunctioning of an associated battery cell may be detected. For example, together with a detection result of the cell ambient sensor, a thermal event of the battery cell may be detected. Using the cell-level voltage sensor, the one or more battery cells being the cause for this thermal event may be determined and adequate disconnector units may be actuated.

According to a second aspect, there is provided a battery assembly. The battery assembly comprises an enclosure, a plurality of battery cells being arranged inside the enclosure and being electrically connected by at least one conductor part. Moreover, the battery assembly comprises a safety system according to the present disclosure. The cell ambient sensor of the safety system is arranged outside the battery cells and inside the enclosure. The disconnector unit of the safety system is coupled to the at least one conductor part. Thus, using the safety system, the conductor part can be electrically separated into two conductor part portions as a function of a detection result of the cell ambient sensor. As has already been explained above, this may be done in case insulation properties of the cell environment are reduced. Altogether, operational safety of the battery assembly is enhanced.

It is noted that all the advantages and effects that have been explained for the safety system also apply to the battery assembly comprising the safety system and vice versa.

In an example, the disconnector unit forms an integral portion of the conductor part. In other words, one or more disconnector units are integrated into the conductor part. Thus, compared to known battery assemblies, the fact that a disconnector unit is present does not translate into additional components that need to be assembled when manufacturing the battery assembly.

According to a third aspect, there is provided a vehicle comprising a battery assembly of the present disclosure. The battery assembly is a traction battery assembly. Additionally or alternatively, the battery assembly is an auxiliary battery assembly. The auxiliary battery assembly may be used to power auxiliary loads in the vehicle, e.g. air conditioner or heater. In this context, it is also possible to connect a DC-DC converter to the battery assembly, if needed. As has already been explained above, the battery assembly according to the present disclosure can be operated in a particularly safe manner. This also applies to a vehicle being equipped with such a battery assembly.

According to a fourth aspect, there is provided a method for operating a battery assembly. The battery assembly comprises an enclosure, a plurality of battery cells being arranged inside the enclosure and being electrically connected by at least one conductor part. The method comprises:
- detecting a characteristic of a cell environment of the battery cells, and
- electrically separating the at least one conductor part into at least two conductor part portions as a function of the detected characteristic of the cell environment.
Thus, a characteristic of the cell environment which potentially affects operational safety in a negative manner, can be detected and countermeasures may be taken. This especially applies to electrical insulation properties of the cell environment. Altogether, using such a method for operating a battery assembly, safe operation of the battery assembly can be ensured.

It should be noted that the above examples may be combined with each other irrespective of the aspect involved.

These and other aspects of the present disclosure will become apparent from and elucidated with reference to the examples described hereinafter.

Examples of the disclosure will be described in the following with reference to the following drawings.
- Figure 1: shows a vehicle according to the present disclosure comprising a battery assembly according to the present disclosure which can be operated using a method according to the present disclosure, wherein the battery assembly comprises a safety system according to the present disclosure,
- Figure 2: shows the battery assembly of Figure 1 in a more detailed top view, and
- Figure 3: shows an alternative battery assembly in a view corresponding to the view of Figure 2.

The Figures are merely schematic representations and serve only to illustrate examples of the disclosure. Identical or equivalent elements are in principle provided with the same reference signs.

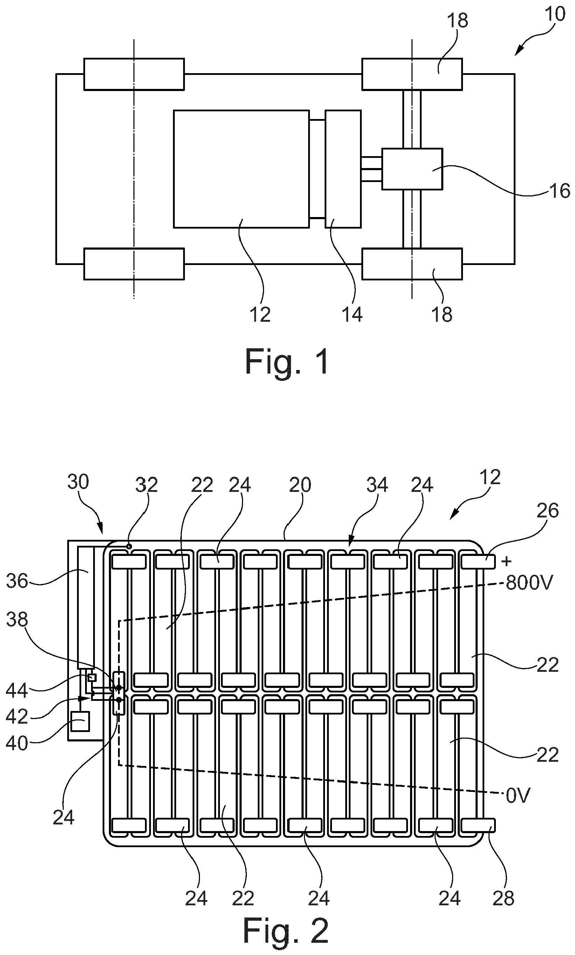

Figure 1 shows a vehicle 10 being an electric vehicle.

The vehicle 10 comprises a battery assembly 12 being electrically connected to an inverter unit 14. The inverter unit 14 is electrically connected to an electric traction machine 16.

The electric traction machine 16 is drivingly coupled to the rear wheels 18 of the vehicle 10.

Thus, energy originating from the battery assembly 12 is used to propel the vehicle 10. Consequently, the battery assembly 12 may also be called a traction battery assembly.

Figure 2 shows the battery assembly 12 in more detail.

The battery assembly 12 comprises an enclosure 20 and a plurality of battery cells 22 being arranged inside the enclosure 20. It is noted that for ease of representation, only some of the battery cells 22 carry a reference sign.

In the present example, the battery assembly 12 comprises 34 battery cells 22. It is understood that this is purely illustrative. The battery assembly 12 can as well comprise more than 34 or less than 34 battery cells 22.

In the present example, the battery cells 22 are electrically connected in series. To this end, neighboring battery cells 22 are connected using a conductor part 24. Thus, the battery assembly 12 comprises a plurality of conductor part 24, wherein for ease of representation only some of the conductor parts 24 carry a reference sign.

Beyond that, one of the conductor parts 24 forms a positive terminal 26 of the battery assembly 12 and another conductor part 24 forms a negative terminal 28 of the battery assembly 12. The positive terminal 26 and the negative terminal 28 extend from the respective battery cell 22 through the enclosure 20 into an exterior of the battery assembly 12.

The battery assembly 12 also comprises a safety system 30.

The safety system 30 comprises a cell ambient sensor 32 which is arranged in a cell environment 34.

It is understood that it is also possible that the safety system 30 comprises two or more cell ambient sensors 32. In this case, the two or more cell ambient sensors 32 are located at different positions in the cell environment 34.

The cell environment 34 is to be understood as the portion of the battery assembly 12 inside the enclosure 20 and outside the battery cells 22. The cell environment 34 is generally filled with clean air, if the battery assembly 12 is in a fully operational condition.

The clean air of the cell environment 34 essentially serves as an electric insulation of the battery cells 22 with respect to the enclosure 20. Moreover, the clean air electrically insulates the battery cells 22 from each other, except for the portions where the battery cells 22 are electrically connected via the corresponding conductor part 24.

In the present example, the cell ambient sensor 32 comprises a pressure sensor. Consequently, using the cell ambient sensor 32, an increase of the pressure in the cell environment 34 may be detected.

In other alternatives, the cell ambient sensor 32 may comprise a temperature sensor, a conductivity sensor or a substance sensor.

In further alternatives, the cell ambient sensor 32 may comprise any combination of two or more of the above-mentioned alternatives.

The safety system 30 also comprises a control unit 36. The cell ambient sensor 32 is communicatively connected to the control unit 36.

Moreover, the safety system 30 comprises a disconnector unit 38.

In the present example, the disconnector unit 38 is integrated into one of the conductor parts 24.

The disconnector unit 38 is essentially a switch. The disconnector unit 38 is configured to electrically separate the conductor part 24 into which it is integrated into two conductor part portions.

In the present example, the disconnector unit 38 comprises a pyrotechnic disconnector. Such a disconnector unit 38 has the advantage that it can reliably electrically separate the conductor part 24 within a comparatively short time.

The pyrotechnic disconnector is sealed by a sealing coat. Consequently, an electric arc that may potentially be created when activating the pyrotechnic disconnector is separated from the cell environment 34.

It is understood that in other alternatives, other types of disconnector units 38 may be used, e.g. a magnetic disconnector or a relay.

More generally speaking and taking into account that instead of being integrated into the conductor part 24, the disconnector unit 38 may as well be attached to the conductor part 24, the disconnector unit 38 may be described as being coupled to the conductor part 24.

Moreover, the disconnector unit 38 is communicatively coupled to the control unit 36.

As will be explained in more detail further below, the control unit 36 is configured to activate the disconnector unit 38 as a function of a detection result of the cell ambient sensor 32.

The safety system 30 further comprises a notification unit 40.

The notification unit 40 is communicatively connected to the control unit 36 and is configured to issue a notification as a function of a detection result of the cell ambient sensor 32.

Moreover, the safety system 30 comprises a diagnostics unit 42 being coupled to the disconnector unit 38 and being configured to monitor the operation of the disconnector unit 38.

In the present example, the diagnostics unit 42 comprises a voltage sensor 44 being configured to measure a voltage between two opposite electric ends of the disconnector unit 38.

The diagnostics unit 42 is communicatively coupled to the control unit 36 such that using the control unit 36, the operation of the disconnector unit 38 can be monitored.

It is noted that any sub-group or all of the control unit 36, the disconnector unit 38 and the notification unit 40 may be integrated into a common unit, e.g. a battery management unit.

The battery assembly 12 can be operated using a method for operating a battery assembly.

In a first step of the method, a characteristic of the cell environment 34 is detected. To this end, the cell ambient sensor 32 is used.

Since in the present example, the cell ambient sensor 32 comprises a pressure sensor, the characteristic is the pressure in the cell environment 34.

The pressure in the cell environment 34 is assumed to lie within a predefined range if the battery assembly 12 is functioning normally.

However, in a case in which a gassing event occurs in one of the battery cells 22, the pressure of the cell environment 34 increases and exceeds a predefined pressure threshold.

In the present context, the gassing event is for example due to a thermal runaway of the affected battery cell 22.

Using the cell ambient sensor 32 and the control unit 36, the fact that the pressure of the cell environment 34 exceeds the predefined pressure threshold is detected.

As a consequence thereof, in a second step of the method, the conductor part 24 which is equipped with a disconnector unit 38 is electrically separated into two conductor part portions.

Altogether, by operating the safety system 30, the battery assembly 12 is transferred into a safe state following the detection of a gassing event.

Being in a safe state implies that the creation of electric arcs inside the battery assembly 12 is rendered impossible or, at least, that electric arcs may not be sustained inside the battery assembly 12.

This may be easily understood if it is assumed that the battery assembly, when functioning normally, is configured to provide a voltage of 800 volts. This means that a voltage between the positive terminal 26 and the negative terminal 28 is 800 volts.

Moreover, a voltage between the battery cell 22 to which the positive terminal 26 is connected and the enclosure 20 is also 800 volts.

Furthermore, a voltage between the battery cell 22 to which the positive terminal 26 is connected and the battery cell 22 to which the negative terminal 28 is connected, it is also 800 volts.

The cell environment 34 has to ensure that in such a configuration no electric arcs are created between the battery cells 22 and/or between one of the battery cells 22 and the enclosure 20. In other words, the cell environment 34 has to provide an electric insulation. This is the case since the clean air forming the cell environment 34 is a good electric insulator.

After the disconnector unit 38 has been activated, there is no electric connection between the leftmost battery cell 22 in the upper row of battery cells 22 in Figure 2 and the leftmost battery cell 22 in the lower row of battery cells 22 in Figure 2.

Consequently, the maximum voltage inside the battery assembly 12 can be measured between the leftmost battery cell 22 and the rightmost battery cell 22 in the upper row of battery cells 22 in Figure 2. In the present example, this voltage is 400 volts.

The same voltage can be measured between the leftmost battery cell 22 and the rightmost battery cell 22 in the lower row of battery cells 22 in Figure 2.

Thus, even in a situation in which due to the gassing event, insulation properties of the cell environment 34 may be reduced, the creation of electric arcs still is avoided due to the reduced voltage level inside the battery assembly 12.

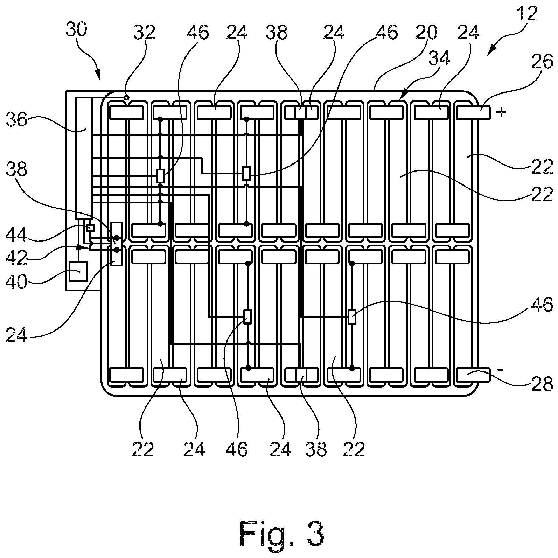

Figure 3 shows an alternative battery assembly 12, wherein the representation of Figure 3 corresponds to the representation of Figure 2.

In the following, only the differences with respect to the battery assembly 12 of Figure 2 will be explained.

The safety system 30 of the battery assembly 12 of Figure 3 comprises a total of three disconnector units 38 which are evenly spread over the serial connection of battery cells 22.

Moreover, in the example of Figure 3, the safety system 30 comprises cell-level voltage sensors 46. Each of the battery cells 22 is equipped with such a cell-level voltage sensor 46. However, for the ease of representation, only some of the cell-level voltage sensors 46 are shown in Figure 3.

Each of the cell-level voltage sensors 46 is configured to detect the voltage of the associated battery cell 22, i.e. of the batteries cell 22 to which it is connected.

Moreover, each of the cell-level voltage sensors 46 is connected to the control unit 36.

Thus, using the cell-level voltage sensors 46 and the control unit 36, and abnormal behavior of a battery cell 22 in terms of its voltage can be determined.

Such a behavior is used as a confirmation of a gassing event that is detected by the cell ambient sensor 32 which again is a pressure sensor in the example of Figure 3.

Consequently, in the example of Figure 3, one or more of the disconnector units 38 may be activated if the pressure in the cell environment 34 exceeds a predefined pressure threshold and if a voltage abnormality is detected in one of the battery cells 22.

Due to the fact that in the example of Figure 3, a total of three disconnector units 38 are provided, an appropriate combination of disconnector unit 38 can be activated. In this context, an appropriate combination is a combination of disconnector units 38 that electrically insulated the one or more battery cells 22 for which a voltage abnormality has been detected.

It is noted that even though a diagnostics unit 42 is only represented for one of the disconnector units 38, also the other disconnector units 38 may be equipped with a diagnostics unit 42.

It is further noted that the examples of Figure 2 and Figure 3 may as well be combined. In this context, the example of Figure 2 may be equipped with cell-level voltages sensors. Moreover, it is possible that the example of Figure 2 comprises more than one disconnector unit.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

### LIST OF REFERENCE SIGNS

- 10: vehicle
- 12: battery assembly
- 14: inverter unit
- 16: electric traction machine
- 18: rear wheels
- 20: enclosure
- 22: battery cell
- 24: conductor part
- 26: positive terminal
- 28: negative terminal
- 30: safety system
- 32: cell ambient sensor
- 34: cell environment
- 36: control unit
- 38: disconnector unit
- 40: notification unit
- 42: diagnostics unit
- 44: voltage sensor
- 46: cell-level voltage sensor

## Claims

1. Safety system (30) for a battery assembly (12) having a plurality of battery cells (22) being electrically connected by at least one conductor part (24), the safety system (30) comprising
a cell ambient sensor (32) being configured to detect a characteristic of a cell environment (34),
a disconnector unit (38) being configured to be coupled to the at least one conductor part (24) and being configured to electrically separate the at least one conductor part (24) into at least two conductor part portions, and
a control unit (36) being communicatively connected to the cell ambient sensor (32) and the disconnector unit (38) and being configured to activate the disconnector unit (38) as a function of a detection result of the cell ambient sensor (32).

2. The safety system (30) of claim 1, wherein the cell ambient sensor (32) comprises at least one of a pressure sensor, a temperature sensor, a conductivity sensor and a substance sensor.

3. The safety system (30) of claim 1 or 2, wherein the disconnector unit (38) comprises at least one of a pyrotechnic disconnector, a magnetic disconnector, and a relay.

4. The safety system (30) of any one of the preceding claims, wherein the disconnector unit (38) is at least partially sealed by a sealing coat.

5. The safety system (30) of any one of the preceding claims, further comprising a notification unit (40) being communicatively connected to the control unit (36) and being configured to issue a notification as a function of a detection result of the cell ambient sensor (32).

6. The safety system (30) of any one of the preceding claims, further comprising a diagnostics unit (42) being coupled to the disconnector unit (38) and being configured to monitor the operation of the disconnector unit (38).

7. The safety system (30) of claim 6, wherein the diagnostics unit (42) comprises a voltage sensor (44) being configured to measure a voltage between two opposite electric ends of the disconnector unit (38).

8. The safety system (30) of any one of the preceding claims, further comprising at least one cell-level voltage sensor (46) being communicatively connected to the control unit (36) and being configured to detect a voltage of an associated battery cell (22), wherein the control unit (36) is configured to activate the disconnector unit (38) as a function of a detection result of the cell-level voltage sensor (46).

9. A battery assembly (12) comprising an enclosure (20), a plurality of battery cells (22) being arranged inside the enclosure (20) and being electrically connected by at least one conductor part (24), and a safety system (30) according to any one of the preceding claims,
wherein the cell ambient sensor (32) is arranged outside the battery cells (22) and inside the enclosure (20), and wherein the disconnector unit (38) is coupled to the at least one conductor part (24).

10. The battery assembly (12) of claim 9, wherein the disconnector unit (38) forms an integral portion of the conductor part (24).

11. A vehicle (10) comprising a battery assembly (12) of claim 9 or 10, wherein the battery assembly (12) is a traction battery assembly and/or an auxiliary battery assembly.

12. A method for operating a battery assembly (12) comprising an enclosure (20) and a plurality of battery cells (22) being arranged inside the enclosure (20) and being electrically connected by at least one conductor part (24), the method comprising:
- detecting a characteristic of a cell environment (34) of the battery cells (22), and
- electrically separating the at least one conductor part (24) into at least two conductor part portions as a function of the detected characteristic of the cell environment (34).

## Amended claims

### Amended claims in accordance with Rule 137(2) EPC.

1. Safety system (30) for a battery assembly (12) having a plurality of battery cells (22) being electrically connected by at least one conductor part (24), the safety system (30) comprising
a cell ambient sensor (32) being configured to detect a characteristic of a cell environment (34) with respect to an insulation property of the cell environment (34) and arrangeable inside an enclosure (20) of the battery assembly (12) and outside the battery cells (22),
a disconnector unit (38) being configured to be coupled to the at least one conductor part (24) and being configured to electrically separate the at least one conductor part (24) into at least two conductor part portions, and
a control unit (36) being communicatively connected to the cell ambient sensor (32) and the disconnector unit (38) and being configured to activate the disconnector unit (38) as a function of a detection result of the cell ambient sensor (32).

2. The safety system (30) of claim 1, wherein the cell ambient sensor (32) comprises at least one of a pressure sensor, a temperature sensor, a conductivity sensor and a substance sensor.

3. The safety system (30) of claim 1 or 2, wherein the disconnector unit (38) comprises at least one of a pyrotechnic disconnector, a magnetic disconnector, and a relay.

4. The safety system (30) of any one of the preceding claims, wherein the disconnector unit (38) is at least partially sealed by a sealing coat.

5. The safety system (30) of any one of the preceding claims, further comprising a notification unit (40) being communicatively connected to the control unit (36) and being configured to issue a notification as a function of a detection result of the cell ambient sensor (32).

6. The safety system (30) of any one of the preceding claims, further comprising a diagnostics unit (42) being coupled to the disconnector unit (38) and being configured to monitor the operation of the disconnector unit (38).

7. The safety system (30) of claim 6, wherein the diagnostics unit (42) comprises a voltage sensor (44) being configured to measure a voltage between two opposite electric ends of the disconnector unit (38).

8. The safety system (30) of any one of the preceding claims, further comprising at least one cell-level voltage sensor (46) being communicatively connected to the control unit (36) and being configured to detect a voltage of an associated battery cell (22), wherein the control unit (36) is configured to activate the disconnector unit (38) as a function of a detection result of the cell-level voltage sensor (46).

9. A battery assembly (12) comprising an enclosure (20), a plurality of battery cells (22) being arranged inside the enclosure (20) and being electrically connected by at least one conductor part (24), and a safety system (30) according to any one of the preceding claims,
wherein the cell ambient sensor (32) is arranged outside the battery cells (22) and inside the enclosure (20), and wherein the disconnector unit (38) is coupled to the at least one conductor part (24).

10. The battery assembly (12) of claim 9, wherein the disconnector unit (38) forms an integral portion of the conductor part (24).

11. A vehicle (10) comprising a battery assembly (12) of claim 9 or 10, wherein the battery assembly (12) is a traction battery assembly and/or an auxiliary battery assembly.

12. A method for operating a battery assembly (12) comprising an enclosure (20) and a plurality of battery cells (22) being arranged inside the enclosure (20) and being electrically connected by at least one conductor part (24), the method comprising:
- detecting a characteristic of a cell environment (34) of the battery cells (22) with respect to an insulation property of the cell environment (34), and
- electrically separating the at least one conductor part (24) into at least two conductor part portions as a function of the detected characteristic of the cell environment (34).
